# EUROPEAN PATENT APPLICATION

(11) **EP 4 432 258 A1**
(43) Date of publication of application: **18.09.2024**
(21) Application number: 23161617.8
(22) Date of filing: 13.03.2023
(51) Int. Cl.: G07B 15/02, G07C 9/20, G06Q 20/04, G06Q 20/32, G07B 15/04

(54) **A METHOD AND SYSTEMS FOR VALIDATING ACCESS OF A PERSON AND/OR A VEHICLE TO A RESTRICTED ZONE**

(71) Applicant: Skidata GmbH, 5083 Grödig/Salzburg (AT)
(72) Inventor: RIHL, Marco, 5083 Salzburg (AT); LANG, Frank, 5083 Salzburg (AT); KIRCHNER, Cornelius, 5083 Salzburg (AT)
(74) Representative: Mewburn Ellis LLP

(57) **Abstract**

The invention refers to a method for validating access of a person (48) and/or a vehicle (14) to a restricted zone, the person (48) and/or vehicle (14) carrying a mobile device (12) configured for radio communication, the method comprising the steps of: detecting the presence of the mobile device (12) in a virtual zone (32); sending one or more options for an electronic ticket to the mobile device (12); confirming one of the options for the electronic ticket using the mobile device (12); and generating the electronic ticket which provides valid access to the restricted zone.

## Description

The present invention relates to a method for validating access of a person and/or a vehicle to a restricted zone. The person and/or vehicle can carry and/or access a mobile device which configured for (short-range) radio communication. The invention further refers to systems which can be used for validating access of a person and/or a vehicle to a restricted zone.

Up to now, the purchase of a ticket often requires that a customer either buys the ticket at a ticket machine or at a ticket booth, which can be associated with a corresponding effort or waiting time. Alternatively, an electronic ticket or e-ticket can be bought already at home using the internet, which is associated with a corresponding advance planning. Further, when boarding a train or bus, a user currently has to buy a ticket in advance and decide on the destination. The train provider often requires expensive payment machines or personnel for ticket booths and checking. In another scenario, control of parking spaces often uses paper tickets. Alternatively, the user can purchase electronic parking tickets which can be inconvenient because they require prior registration or an account to communicate with the electronic ticket provider.

The present invention is based on the objective of providing a system or method for simplifying the purchase of a ticket and/or the entrance to a restricted zone, such as a concert venue, a public transport system, or a parking space.

This objective is solved by the subject matter of the independent claims. Optional embodiments are described in the dependant claims.

The invention refers to a method for validating access of a person and/or a vehicle to a restricted zone. The person and/or vehicle can carry and/or access a mobile device configured for (short-range and/or long-range) radio communication. The method comprises the steps of: detecting the presence of the mobile device in a virtual zone; sending one or more options for an electronic ticket to the mobile device; confirming one of the options for the electronic ticket using the mobile device; and generating the electronic ticket which provides valid access to the restricted zone.

The invention further refers to a system for validating access of a person and/or a vehicle to a restricted zone. The person and/or vehicle can carry and/or access a mobile device configured for short-range radio communication. The system comprises a system short-range antenna and a system controller. The system short-range antenna is configured to provide short-range radio communication in a virtual zone. The system controller is in data-communication with the system short-range antenna. The system controller is configured to control the antenna for detecting a presence of the mobile device in the virtual zone. The system controller is further configured to, upon detection of the mobile device in the virtual zone, send one or more options for an electronic ticket to the mobile device, optionally via the system short-range antenna. The system controller is also configured to receive a confirmation of one of the options for the electronic ticket from the mobile device, and to generate an electronic ticket upon receiving the confirmation.

The invention also refers to a system for validating access of a person and/or a vehicle to a restricted zone. The person and/or vehicle can carry and/or access a mobile device configured to determine the location thereof using a global navigation satellite system and configured for radio communication. The system comprises a system controller and, optionally, a system antenna. The optional system antenna is configured to provide radio communication. The system controller is in data-communication with the mobile device, optionally via the system antenna which is in data-communication with the system controller. The system controller is configured to define a location and size of the virtual zone and send the information on the location and on the size to the mobile device. The system controller is further configured to, upon receiving a confirmation that the mobile device is in the virtual zone by the mobile device, send one or more options for an electronic ticket to the mobile device. The system controller is also configured to receive a confirmation of one of the options for the electronic ticket from the mobile device and to generate an electronic ticket upon receiving the confirmation.

The invention further refers to a mobile device configured to validate access of a person and/or a vehicle to a restricted zone. The mobile device is configured to be carried by the person and/or the vehicle. The mobile device comprises a device short-range antenna, a display device, an input device, and a device controller. The device short-range antenna is configured to provide short-range radio communication. The display device is configured to display information to the person. The input device is configured to receive an input by the person. The device controller is in data-communication with the device short-range antenna, the display device, and the input device. The device controller is configured to receive one or more options for an electronic ticket via the device short-range antenna. The device controller is further configured to control the display device for displaying the one or more options for an electronic ticket to the person. The device controller is also configured to receive a confirmation signal from the input device indicating a confirmation of one of the options for the electronic ticket, and send the confirmation using the device short-range antenna.

The invention also refers to a mobile device configured to validate access of a person and/or a vehicle to a restricted zone. The mobile device is configured to be carried by the person and/or the vehicle. The mobile device comprises a device antenna, location device, a display device, an input device, and a device controller. The device antenna is configured to provide (long-range) radio communication. The location device is configured to determine the location of the mobile device using a global navigation satellite system. The display device is configured to display information to the person. The input device is configured to receive an input by the person. The device controller is in data-communication with the device antenna, the location device, the display device, and the input device. Optionally, the device controller is configured to store a position and size of a predetermined virtual zone. The device controller is configured to determine whether the mobile device is within the predetermined virtual zone. The device controller is further configured to send a confirmation that the mobile device is in the virtual zone using the device antenna. The device controller is also configured to receive one or more options for an electronic ticket via the device antenna. The device controller is configured to control the display device for displaying the one or more options for an electronic ticket to the person. The device controller is further configured to receive a confirmation signal from the input device indicating a confirmation of one of the options for the electronic ticket, and to send the confirmation using the device antenna.

The invention further refers to a method for controlling a system for validating access of a person and/or a vehicle to a restricted zone. The person and/or vehicle can carry and/or have access to a mobile device configured for short-range radio communication. The system comprises a system short-range antenna configured to provide short-range radio communication in the virtual zone. The method comprises the steps of detecting the presence of the mobile device in the virtual zone using the short-range radio communication; sending one or more options for an electronic ticket to the mobile device; receiving a confirmation signal from the mobile device indicating a confirmation of one of the options for the electronic ticket; and generating the electronic ticket which provides valid access to the restricted zone.

The invention also refers to a method for controlling a system for validating access of a person and/or a vehicle to a restricted zone. The person and/or vehicle can carry and/or have access to a mobile device configured for radio communication. The system optionally comprises a system antenna configured to provide radio communication with the mobile device. The method comprises the steps of: defining a location and size of a virtual zone and sending the information on the location and on the size to the mobile device; receiving a confirmation by the mobile device that the mobile device is in the virtual zone, optionally using the radio communication, further optionally provided by the system antenna; sending one or more options for an electronic ticket to the mobile device using the radio communication; receiving a confirmation signal from the mobile device indicating a confirmation of one of the options for the electronic ticket; and generating the electronic ticket which provides valid access to the restricted zone.

The invention further refers to a method for controlling a mobile device configured to validate access of a person and/or a vehicle to a restricted zone. The mobile device is configured to be carried by the person and/or the vehicle. The mobile device comprises a device short-range antenna, a display device, and an input device. The device short-range antenna is configured to provide short-range radio communication. The display device is configured to display information to the person. The input device is configured to receive an input by the person. The method comprises the steps of: receiving one or more options for an electronic ticket via the device short-range antenna; displaying the one or more options for an electronic ticket to the person on the display device; receiving a confirmation signal from the input device indicating a confirmation of one of the options for the electronic ticket; and sending the confirmation, optionally using the device short-range antenna.

The invention also refers to a method for controlling a mobile device configured to validate access of a person and/or a vehicle to a restricted zone. The mobile device is configured to be carried by the person and/or the vehicle. The mobile device comprises device antenna, a location device, a display device, and an input device. The device antenna is configured to provide radio communication. The location device is configured to determine the location of the mobile device using a global navigation satellite system. The display device is configured to display information to the person. The input device is configured to receive an input by the person. The method comprises the steps of: determining whether the mobile device is within a predetermined virtual zone, a size and location thereof being optionally stored on the mobile device; sending a confirmation that the mobile device is in the virtual zone using the device antenna; receiving one or more options for an electronic ticket via the device antenna; displaying the one or more options for an electronic ticket to the person on the display device; receiving a confirmation signal from the input device indicating a confirmation of one of the options for the electronic ticket; and sending the confirmation using the device antenna.

The principal idea of this invention is that the person and/or the vehicle no longer needs to actively purchase a ticket but the ticket is offered to the person and/or vehicle at an appropriate time. The determination when to offer the ticket to the person and/or the vehicle is spatially determined i.e. when the person and/or the vehicle enters the virtual zone. This provides a reliable indication that the person and/or the vehicle intends to purchase a ticket. The virtual zone is a physical area which may be in front of or close to the restricted area. For example, the person and/or the vehicle needs to pass the virtual zone before entering the restricted zone. So, entering the virtual zone is a reliable indication that the person and/or the vehicle is intended to buy a ticket. In this case, one or more ticket options are presented to the person and/or the vehicle from which the person and/or the vehicle can choose the desired ticket.

With the invention, it is no longer necessary to search for ticket options for a particular restricted area because the available ticket options are presented to the person and/or the vehicle without the person and/or the vehicle need to actively search for the ticket options. Further, it is no longer necessary to actively buy the tickets in advance since the ticket can be purchased on the go by entering the virtual zone. One or both of these aspects increase the ease and simplicity of a ticket purchase/acquisition. This also simplifies the access to the restricted area and makes the entrance into the restricted area frictionless, smoother, and/or easier.

Further, the invention can be regarded as a replacement of or addition to a usual ticket vending machine or online shop for purchasing a ticket because the electronic ticket generated by the method as described above results in a generation or production of a ticket that has to same effect as a paper ticket or electronic ticket bought online.

The following optional features and/or optional embodiments of the invention are applicable to any one of the aspects described above.

The person may be an adult, a teenager, or a child that wants to access the restricted area. The restricted area may be a security zone (e.g. at airports), stadium, or any other event venue. Further, the restricted area may be a parking space (such as a car park or parking lot). Access to the restricted area may be controlled using a mechanical barrier, blocking device, by staff, and/or security personnel. For example, access to the restricted area is only allowed with a valid ticket. In this case, the ticket may need to be presented to the staff or security personnel and/or is read-out/scanned by the mechanical barrier or blocking device. However, it is also possible that access to the restricted area is not controlled by a mechanical barrier, staff, and/or security personnel but can be controlled or checked when already being in the restricted area or by inspection rounds. For example, access to a parking space is not controlled or checked - it may be communal space or parking spots on the side of a street. In this case, a parking vehicle is checked whether it is associated with a valid electronic parking ticket. Similarly, access to a public transport system may not be routinely checked upon entering the public transport system but only during predetermined or random inspection rounds.

The vehicle may be a car, motorcycle, truck, lorry, or a combination of a car or truck with a trailer. In general, the vehicle may be any vehicle that can be parked in a parking space, for example a bicycle in a bicycle parking space.

The access to the restricted zone may be validated by purchasing a ticket or acquiring/obtaining a ticket that is paid later, for example upon leaving the restricted area. A valid ticket may be used for validating the access to the restricted area. Often, there are various ticket options each of which provide a valid access to the restricted area. For example, the ticket options differ in their duration of access to the restricted area (e.g. a day ticket, a monthly ticket, etc), the number of persons and/or vehicle eligible to access the restricted area, and/or the purpose/destination of the ticket (e.g. when using a public transport system).

The ticket may be an electronic ticket of any form as long as it can be stored, processed, and/or generated by the mobile device and/or the system. The ticket may be stored to a virtual wallet on the mobile phone. The ticket may be printed out. The ticket generated by the invention may have the same effects as a commonly used paper and/or electronic ticket.

The mobile device may include a handheld user device such as a cell phone or mobile phone. The person may carry the mobile device when driving the vehicle. As such, the user and/or vehicle can carry the mobile device when moving, e.g. entering the virtual zone. Further, the mobile device may be a portion or functional control unit of a controller or computer of the vehicle, for example for controlling the vehicle. In this case, the mobile device may be permanently fixed to the vehicle and can be controlled by the person driving the vehicle. In other words, the mobile device may also encompass components integral to the vehicle which allow to store and exchange data. The mobile device may also include a mobile device that is specifically designed for automatized access, e.g. to a parking space and/or a toll road.

The mobile device and/or the mobile device as part of a functional unit of the vehicle can be configured for long-range radio communication with a mobile (phone) network, mobile radio network, Wi-Fi network, and/or other wireless means of data communication. To this end, the mobile device and/or the vehicle includes a device antenna which allows wireless and/or long-range data communication with another device and/or system. Further, the mobile device can exchange data via the internet with another device and/or system and wherein the connection to the internet is established using the radio communication.

The mobile device may include a controller which can include a processor and a memory. The memory may be configured to store programs, algorithms, and/or applications which can be executed by the processor. The mobile device may further include a display device and/or an input device which are in data communication with the processor and/or the memory. A touch screen is an example for a display device and an input device. However, the display device may include a display, light sources (e.g. LED), and/or light generating means for displaying information to the person. The input device may include a keyboard, button, and/or switches that can be separate to the display device. The mobile device may further include a device antenna which provides wireless data communication with the system and/or the internet. For example, the device antenna can connect to a cellular network, a mobile network, and/or a Wi-Fi network. Optionally, the functionality of the mobile device for purchasing and/or acquiring a ticket as described herein may be implemented by a single application (app) stored on the mobile device.

The system may include a system antenna and/or a system controller which is in data communication with the system antenna. The system antenna is configured to provide wireless data communication with the mobile device and/or the internet. For example, the system antenna can connect to a cellular network, a mobile network, and/or a Wi-Fi network. The system antenna may be physically separated from the system controller. Data between the system antenna and a system controller may be exchanged using a wireless or wired communication. The system controller may directly be connected to the internet, cellular network, a mobile network, and/or a Wi-Fi network, i.e. without having an own system antenna. The data communication between the system controller and the mobile device may be established using external means, such as the internet, cellular network, a mobile network, and/or a Wi-Fi network. In other words, the system (e.g. the system controller) is configured to be in data communication with the mobile device.

The system controller may include a processor and a memory. The memory may be configured to store programs, algorithms, and/or applications which can be executed by the processor. The system controller may include a server and/or one or more computers and/or can be implemented by a cloud solution. For example, the location and size of the virtual zone may be stored in the memory of the device controller.

The virtual zone corresponds to a physical area that is designated in advance. For example, a position, location, size, shape, and/or any other parameter for defining an area in the real world can be defined in advance. However, the virtual zone may or may not be marked in the real world. For example, a person and/or vehicle does not see or recognise whether they entered the virtual zone. This may only be detected using the mobile device and/or by the system.

In an alternative configuration, the virtual zone is additionally marked in the real world such as by lines and/or colour codes on the ground and/or floor, by signs and/or one or more posts. In this case, a person can visually see the location, position, and/or size of the virtual zone. For example, a post or a plurality of posts can indicate the presence of a virtual zone. In this regard, the term "virtual" means that the zone or area is not necessarily defined by the physical circumstances but can be a mere definition set out in advance.

The virtual zone may be placed close to, at, and/or within the restricted area. For example, the virtual zone may be placed such that a user is required to pass the virtual zone before entering the restricted zone. The virtual zone may be in front of a mechanical barrier or blocking device. However, the virtual zone may correspond to a physical area which the person and/or the vehicle usually passes or stays before entering the restricted zone. For example, the virtual zone may be a fast-track lane for entering the restricted zone.

The detection of the presence of the mobile device in the virtual zone can be done by any technical means. This can include that the detection of the mobile phone in the virtual zone is done in such a way that a system controller (e.g. a server or computer) can process the information. The presence of the mobile device in the virtual zone indicates that the person and/or the vehicle are in the virtual zone. This in turn indicates that the person and/or the vehicle is likely to want to purchase and/or acquire a ticket. As such, the system sends one or more ticket options to the mobile device without the person and/or vehicle actively requesting ticket options. In other words, the ticket options are automatically sent to the mobile device once the mobile device is detected to be in the virtual zone. Thus, the presence of the mobile device in the virtual zone is a trigger for sending the ticket options. As a result, the person and/or the vehicle does not need to actively search for the one or more options for the electronic ticket but rather they are presented with the ticket options upon entering the virtual zone.

Thus, upon detection of the presence of the mobile device in the virtual zone, one or more ticket options are sent to the mobile device. The ticket options sent to the mobile device may depend on the type of virtual zone or the individual virtual zone. The system may handle a plurality of virtual zones. So, the system sends different ticket options for a first virtual zone (e.g. close to a stadium) compared to a second virtual zone (e.g. close to concert hall).

For example, an application executed on the mobile device can receive information on the various ticket options from the system controller. Alternatively or additionally, the various ticket options can be stored on the mobile device. Upon detection that the mobile device has entered the virtual zone, the system may send a trigger to the mobile device to present various ticket option whereby the trigger may include information on the applicable subset of ticket options from the various ticket options stored on the mobile device. Optionally, the mobile device displays the one or more ticket option using the display device.

The person and/or the vehicle can then choose between the various ticket options by confirming one or more of the options for the electronic ticket. This may be done by inputting information using the input functionality of the mobile device. Alternatively, the person and/or the vehicle may reject the ticket options if they have no interest in entering and/or staying the restricted zone. For example, the vehicle may pass through a parking space, but no parking is intended.

Once the ticket is confirmed, the electronic ticket as such is generated. The ticket may only be stored on the server and/or can be sent to the mobile device. The ticket provides a valid access to the restricted area. The ticket may include information on the type of restricted zone, the time of acquiring or purchasing the ticket, the duration of validity of the ticket, the number and/or names of the persons and/or vehicles for which the ticket provides a valid access the restricted zone, and/or any other type of information that is helpful or necessary for identifying, verifying, and/or checking the ticket. For example, the electronic ticket includes a barcode or QR code that can be read out by a scanner of the barrier. The electronic ticket may alternatively or additionally include a near-field communication (NFC) ticket or a wallet ticket.

In an optional embodiment, the method further comprises providing a short-range antenna configured to provide short-range radio communication in the virtual zone and the mobile device is configured for short-range radio communication. Step a) optionally includes detecting the presence of the mobile device in the virtual zone using the short-range radio communication.

In this embodiment, the range of the short-range radio communication may be used to define the size and the location of the virtual zone. For example, the system includes a system short-range antenna. The range of data communication provided by the system short-range antenna can effectively define the virtual zone. Of course, the system may include a plurality of system short-range antennas which provide a plurality of virtual zones or can commonly define a single virtual zone. So the step of detecting the presence of the mobile device in the virtual zone can be implemented by constantly or periodically sending out signals from the system short-range antenna to search for mobile devices. If a mobile device is detected, it can be determined that the mobile device is within the virtual zone. In other words, this provides a simple detection of the mobile device in the virtual zone by checking if any mobile device responds. Further, the virtual zone can be implemented in a simple fashion by providing the device short-range antenna.

The short-range radio communication can be a short-range wireless technology which may include at least one of: Bluetooth, Bluetooth Low Energy (BTLE), Zigbee, and/or infrared. This means that the mobile device and the system are each provided with a transceiver configured to communicate using short-range wireless technology.

After detecting the presence of the mobile device within the virtual zone, the system and the mobile device may automatically establish a (secure) communication channel before exchanging data, such as the various ticket options, the confirmation of one of the ticket options, and/or sending the ticket. The (secure) communication channel may be initiated by commonly known procedures, e.g. including a handshake.

In an optional embodiment, step b) includes sending the one or more ticket options using the short-range radio communication.

Sending the one or more ticket options, the confirmation of one of the ticket options, and/or the generated ticket using short-range radio communication is a simple solution because a communication channel has already been set up when detecting the presence of the mobile device within the virtual zone. So, no further means are required providing data communication between the mobile device and the system.

In an alternative embodiment, sending the one or more ticket options, the confirmation of one of the ticket options, and/or the generated ticket can be executed by using long-range radio communication. This may be beneficial if the presence of the mobile device in the virtual zone is detected not by virtue of the short-range radio communication as described above or the short-range radio communication is solely used for detecting the presence of the mobile device in the virtual zone but any other data communication between the mobile device and the system is not executed using short-range radio communication.

In an optional embodiment, prior to step a), a location and a size of the virtual zone is defined, and/or step a) is executed using a global navigation satellite system.

If the virtual zone is not defined by the range of the short-range radio antenna as described above, the location and size of the virtual zone needs to be determined prior to any data exchange with the mobile device. This determination step may only be executed once. The location and size of the virtual zone may be stored on the mobile device and/or on the system.

The location of the mobile device and/or vehicle may be determined using a global navigation satellite system (GNSS) such as Global Positioning System (GPS) or Galileo. In this case, the mobile device includes a location device configured to determine the location of the mobile device using the global navigation satellite system. For example, the mobile device is configured to receive signals from several satellites of the GNSS and compute from the information included in the signals the location of the mobile device. Such a functionality is routinely implemented with mobile devices and/or vehicles.

In this embodiment, the presence of the mobile device in the virtual zone is checked by the mobile device itself. This is unlike the embodiment described above using a short-range radio communication in which the server can detect the presence of the mobile device. When using a GNSS for determining the presence in the virtual zone, the mobile device may automatically present the various ticket options which can be prestored on the mobile device for a plurality of virtual zones. For example, a plurality of virtual zones (i.e. their locations and sizes) can be stored on the mobile device along with corresponding options for electronic tickets. For example various parking zones within a city can be stored on the mobile device and/or the vehicle along with corresponding parking ticket options.

Alternatively, the mobile device sends data indicating the presence of the mobile device in a respective virtual zone to the server which, as described above, sends the one or more options for the electronic ticket to the mobile device.

In an optional embodiment of step b), the one or more ticket options (options for the electronic ticket) are pushed to the mobile device.

For example, the server sends a push message to the mobile device. The push message may be displayed to the person on the home screen or with the mobile device not turned on. The push message may include the one or more options for the electronic ticket. Alternatively, the push message is a mere notification to the person that one or more ticket options are available. The one or more ticket options are only downloaded to the mobile device once the person actively requests the presentation of the one or more ticket options, for example by pressing on the link in the push message or by opening an application.

In an optional embodiment, the mobile device is configured to store and execute an application configured to receive the one or more options for the electronic ticket.

The application or app can be a program or software that is stored and executed on the mobile device. For example, the push message sent from the server to the mobile device is processed by the application running on the mobile device. Alternatively, the server does not send a push message to the mobile device but data that prompts the application to display the one or more options for the electronic display in a fashion similar to a push message, e.g. without user interaction. The one or more ticket options can be processed and presented by the application. Using an application is helpful for providing the respective rights for displaying a push message. Further, the subsequent processing of selecting, acquiring, and/or paying the electronic ticket can be all done within the application which simplifies the process.

In an optional embodiment, step a) includes establishing a communication channel with the mobile device.

For example, the system is configured to execute a handshake between the system or system antenna and the mobile device and setup a secure communication channel if the person and/or vehicle is within the virtual zone.

In an optional embodiment, step c) includes paying the ticket. Optionally the ticket is paid using the short-range radio communication or by long-range data communication.

The payment of the ticket may be required after selecting one or more of the ticket options. The payment of the ticket may include a process between the mobile device and the system. Alternatively, the payment of the ticket may be done by a third party such as a payment service provider. In an embodiment, the ticket will only be generated if the ticket was paid. This may correspond to a prepaid ticket which are often used for concerts, festivals, or other leisure activities where the ticket needs to be paid upfront before entering the restricted area.

Similarly, the ticket may be a ticket for using public transport system which may need to be paid before using the public transport system.

In the data exchange for paying the ticket is done using the short-range radio communication, all the data exchange between the mobile device and the system may be done using the short-range radio communication. So, the system may not require means for providing data communication via additional channels such as long-range radio communication or the Internet.

Alternatively, the data exchange between the system and the mobile device for paying the ticket may be done using long-range radio communication. This may be implemented if the payment of the ticket is done via a third party or service provider which may not have access to the short-range radio communication provided by the system.

In an optional embodiment, the restricted zone is a parking space for the vehicle. Optionally, the confirmation of one of the options for the electronic ticket opens an entrance barrier controlling an entrance to the parking space.

So, in this embodiment, the confirmation to select one or more of the ticket options or, alternatively, the payment of the ticket triggers the system to send an opening signal to the entrance barrier for opening the entrance or exit barrier for providing access to the parking space. This means that there is a direct link between the generation of the ticket and the opening of the entrance barrier. Optionally, no further means are necessary for generating the opening signal. For example, the ticket may not need to be presented to or to read out by the entrance barrier or the system for generating the opening signal.

The entrance barrier may be an example of a mechanical barrier or blocking device. Upon receiving the opening signal, the entrance barrier or blocking device is set to the open state. Generally, the open state includes that the blocking device (e.g. the entrance barrier) maintains to be in an open position, the blocking device is configured to be manually opened by the person and/or the vehicle (which may not be implemented with an entrance barrier for a parking space), or the blocking device is moved to the open position. Further, a closed state may include that the blocking device is locked to a closed position or that the blocking device is moved to a closed position.

So, in the open state, the person and/or vehicle may manually open the blocking device. For example, the blocking device is in an unlocked position which allows manual actuation of the blocking device by the person and/or the vehicle. For example, turnstiles are unlocked so that the person can rotate the turnstiles.

Another embodiment of the open state is that the blocking device or (entrance) barrier is permanently in an open position in which the blocking device or entrance barrier is in such a state that the person and/or vehicle can pass the blocking device or entrance barrier. For example, in the open position, the barrier, the sliding door, and/or the gate are positioned such that an entrance or access defined by the blocking device (e.g. the entrance barrier) is not closed by the barrier, the sliding door, or the gates, respectively. The blocking device can be in the open position for allowing smooth access of the person and/or the vehicle until the blocking device receives the closing signal. In this case, the person and/or the vehicle does not need to wait for the blocking device to be put in the open position but remains permanently open until the closing signal is received.

The open state may also refer to the situation in which the blocking device is in the closed position and receives the opening signal upon which the blocking device is actively moved to the open position. This means that the blocking device is in the closed position until the blocking device is actively opened upon receiving the opening signal.

The closed state can include a situation in which to blocking device is locked, e.g. cannot be manually opened by the person. For example, turnstiles can no longer be rotated by the user upon receiving the closing signal.

The closed state can also refer to the closed position in which the blocking device is actively closed upon receiving the closing signal. For example, the closing signal is generated if it is determined that the person and/or the vehicle has passed the blocking device so that the blocking device can return to the closed position from the open position.

The blocking device may comprise a first blocking element (e.g. a first barrier) and a second blocking element (e.g. a second barrier). The blocking device may comprise a first supporting device and/or a second supporting device. The first supporting device can support, allow movement of, and/or move the first blocking element from the open position to the closed position. The second supporting device can support, allow movement of, and/or move the second blocking element from the open position to the closed position. The access to restricted area (e.g. a passage) may be provided between and/or is limited by the first supporting device and the second supporting device.

The first supporting device and/or the second supporting device may include an actuator, such as an electric motor, for moving the first blocking element and the second blocking element, respectively. Alternatively or additionally, the first supporting device and/or the second supporting device may comprise locking means for locking and unlocking the first blocking element and/or the second blocking element, respectively. In an unlocked state (an example of the open state), the first blocking element and/or the second blocking element can be moved (e.g. from the closed position to the open position or rotated in case of a turnstile) by the person and/or the movable objected. In a locked state, the first blocking element and/or the second blocking element cannot be moved (e.g. from the closed position to the open position or rotated in case of a turnstile) by the person and/or the movable object. The actuator or locking device may be controlled by the system.

In an optional embodiment, a second short-range antenna is provided for providing short-range radio communication in a virtual entry-check zone. The entrance barrier may be positioned between the virtual entry-check zone and the virtual zone. Optionally, the entry of the vehicle in the parking space is confirmed if the mobile device is detected in the virtual entry-check zone using the short-range radio communication.

The second short-range antenna may have to same configurations, features, and/or optional embodiments as the first short-range antenna. The only difference between the first short-range antenna and the second short-range antenna may be their respective location or position. The second short-range antenna may provide short-range radio communication in the virtual entry check zone which can have the same configurations, features and/or optional embodiments as the virtual zone. The only difference between the virtual zone and the virtual entry second check zone may be their respective location or position.

The entrance barrier can be arranged between the virtual zone and the virtual entry check zone. So, if the vehicle wants to enter the parking space, the vehicle first passes the virtual zone, then the entrance barrier, and finally the virtual entrance check zone before reaching its parking spot. The virtual entry check zone can be provided for generating a confirmation that the vehicle has passed the entrance barrier and/or entered the parking space. Further, the confirmation that the mobile device and/or vehicle was detected in the virtual entry check zone can be used for generating the closing signal. This may be for example possible if the virtual entry check zone is outside the operation range of the entrance barrier or blocking device. So, further means for detecting that the vehicle has passed the entrance barrier may not be necessary since the passing of the entrance barrier can be checked by setting up a short-range radio communication with the mobile device in the virtual entry check zone.

The detection of the vehicle in the virtual entry check zone may be additionally or alternatively used to start a timer that records the time of parking in the parking space, for example in the absence of the entrance barrier.

In an optional embodiment, the method further comprises providing an exit barrier for controlling exit from the parking space. Optionally, the method further comprises paying the ticket and opening the exit barrier after detecting the paid ticket at the exit barrier, or detecting the presence of the mobile device in a virtual exit zone close to or at the exit barrier using short-range radio communication, and opening the exit barrier if the ticket has been paid.

The exit barrier may have the same features, characteristics and/or optional embodiments as the entrance barrier. The exit barrier is provided for mechanically controlling the exit from the parking space similar to the entrance barrier which is provided for mechanically controlling the access to the parking space.

There are two options to control the opening of the exit barrier. The first option is to pay the ticket at a separate vending machine or online, for example by clicking on a link in the displayed ticket. Commonly used techniques for paying a parking ticket can be employed. When approaching the exit barrier, the ticket is either presented to a reader or scanner of the exit barrier or the exit barrier is provided with a means for detecting the mobile device (e.g. a further short-range radio antenna), establishing communication with the mobile device for checking whether a paid ticket is stored on the mobile device or stored at the server. If a paid ticket is detected by the system and/or the exit barrier, the opening signal is generated and sent to the exit barrier.

The second option is to provide a virtual exit zone in which short-range radio communication with the system is possible. The virtual exit zone may be provided by a further short-range radio antenna. The virtual exit zone may have to same features characteristics and/or optional embodiments as the virtual zone. The only difference may be that the virtual exit zone placed in front of the exit barrier whereas the virtual zone is placed in front of the entrance barrier. If the mobile device is detected in the virtual exit zone using short-range radio communication, a communication between system and the mobile device is established for checking whether an unpaid ticket is stored on the mobile device and/or the system. If such an unpaid ticket is detected, the user may be prompted to pay the ticket, for example as described above - using the short-range radio communication to directly pay ticket with the system and/or using long-range radio communication to pay a ticket via a third party or service provider. When the ticket is paid, a confirmation is sent to the system which triggers the system to generate an opening signal that is sent to the exit barrier. So, the payment of the ticket can also trigger the opening of the exit barrier.

In an optional embodiment, the restricted zone is a venue area, wherein the virtual zone is offset to a checkpoint at which a valid access to the venue area is checked. Optionally the checkpoint includes a barrier or blocking device as described above.

The venue area may be a sport stadium, cinema, or concert hall. Generally, the venue area may be any restricted space for cultural, sports, or business events for which a valid access requires a ticket. The venue area may be accessed through one or more checkpoints. As described above, the checkpoints may be controlled by staff or security personnel and/or by one or more barriers or blocking devices as described above.

The virtual zone may not be directly in front of the checkpoint or close to the checkpoint but may refer to one or more dedicated areas spatially separated from the checkpoints. For example, the virtual zone may be in an entrance hall or outside of the premises of the venue area. For example, the virtual zone may be one, 2, 3, 4, 5, or 10 m away from the checkpoint. The virtual zones may be considered corresponding to booths or stands commonly used for selling tickets. In other words, the provision of the virtual zones may spatially separate the points for purchasing a ticket and the points for controlling the ticket.

In an optional embodiment, the restricted zone is part of a public transport system. Optionally the virtual zone is at a stop or station of a vehicle of the public transport system.

With this embodiment, the restricted zone may be any area that forms a part of a public transport system. For example, the restricted zone may be the interior of a bus, train, or the like. In this case, the virtual zone may be in or around a bus stop or station. For example, if a person stands at or close to a bus stop, there will be short-range radio communication with the system antenna. Further, the restricted zone may be a platform for boarding a train or an underground passage for boarding an underground train. In this case, the virtual zone may be in front of or close to a blocking device for mechanically controlling the access to the public transport system. For example, the virtual zone may be in an area which is necessary to reach the platform or underground passage.

The virtual zone may also be within a bus, train, or the like. So upon entering the bus or train, the user receives the one or more options for buying a ticket when already onboard.

In an optional embodiment, the method further comprises detecting the presence of the mobile device in another virtual zone using short-range radio communication after using the public transport system, wherein a price of the ticket depends on the virtual zones where the mobile device was detected upon accessing and exiting the public transport system.

In this case, the price of the ticket may depend on the distance and/or time travelled. For example, the starting point and/or starting time are determined upon detecting the mobile phone in a first virtual zone. The end point or end time are determined upon detecting the mobile phone in a second virtual zone which may be a virtual zone associated with a bus stop, train station, or the like. The system may store a tariff system which links a price of the ticket to the starting point and end point and/or to the starting time and end time.

Alternatively, the start time and end time or the duration of the travel can be determined by checking how long there is a short-range radio communication with the mobile device, for example when the virtual zone is within the interior of the bus, the train, or the like. In other words, it is checked using short-range radio communication how long the person or mobile device is on board the bus the train or the like.

In an optional embodiment, the system further comprises one or more barriers or blocking devices for controlling access to the restricted zone. The barrier or blocking device are configured to be in an open state in which the person and/or the vehicle can pass the barrier/ blocking device and to be in a closed state in which the barrier/blocking device blocks the person and/or the vehicle from passing the blocking device. Optionally, the system controller is in data-communication with the barrier/blocking device for controlling the barrier/blocking device to be in the open state or the closed state. Further optionally, the system controller puts the barrier/blocking device in the open state after generating the ticket.

The invention is explained in more detail below by way of example with reference to the accompanying figures.
- Figs.1a to 1d: show schematic representative situations when using a system and mobile device for validating access of a vehicle to a parking space;
- Fig.2: shows a schematic representation of the mobile device of Figs. 1a to 1d;
- Fig. 3: shows a block diagram of a method for validating access of a vehicle to a parking space according to Figs. 1a to 1d;
- Figs.4a to 4d: show schematic representative situations when using a system and mobile device for validating an exit of a vehicle from a parking space;
- Fig. 5: shows a block diagram of a method for validating an exit of a vehicle from a parking space according to Figs. 4a to 4d;
- Figs.6a, 6b: show schematic representative situations when using a system and mobile device for validating access of a person to a restricted area;
- Fig. 7: shows block diagram of a method for validating access of a person to a restricted area according to Figs. 6a and 6b;
- Fig. 8: shows a schematic representative situation when using a system and mobile device for validating access of a person to a vehicle of a public transport system;
- Fig. 9: shows a block diagram of a method for validating access of a person to a vehicle of a public transport system according to Fig. 8;
- Fig. 10: shows a top view on a parking space and a schematic representation of system of another embodiment for validating access of a vehicle to a parking space; and
- Fig. 11: shows a block diagram of a method for validating access of a vehicle to the parking space according to Fig. 10.

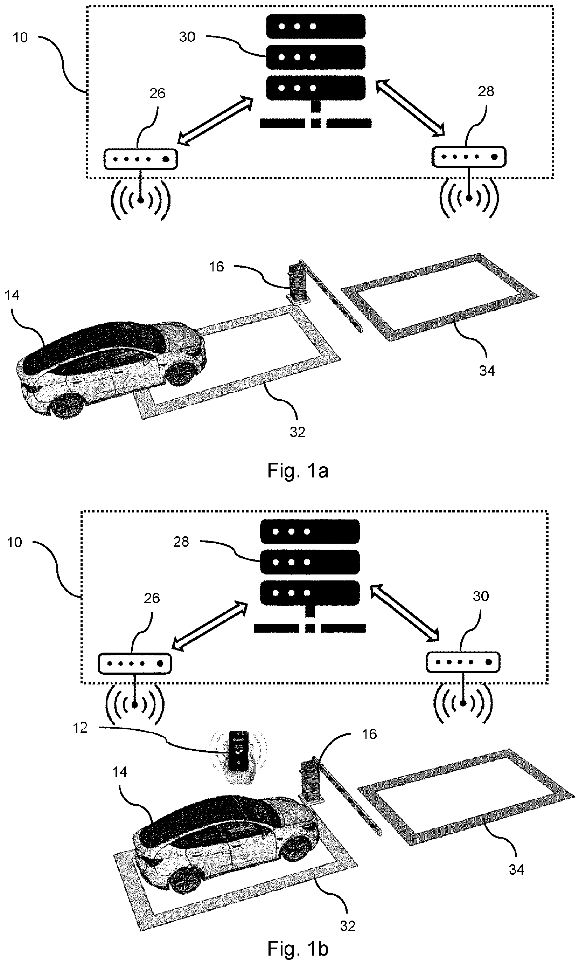

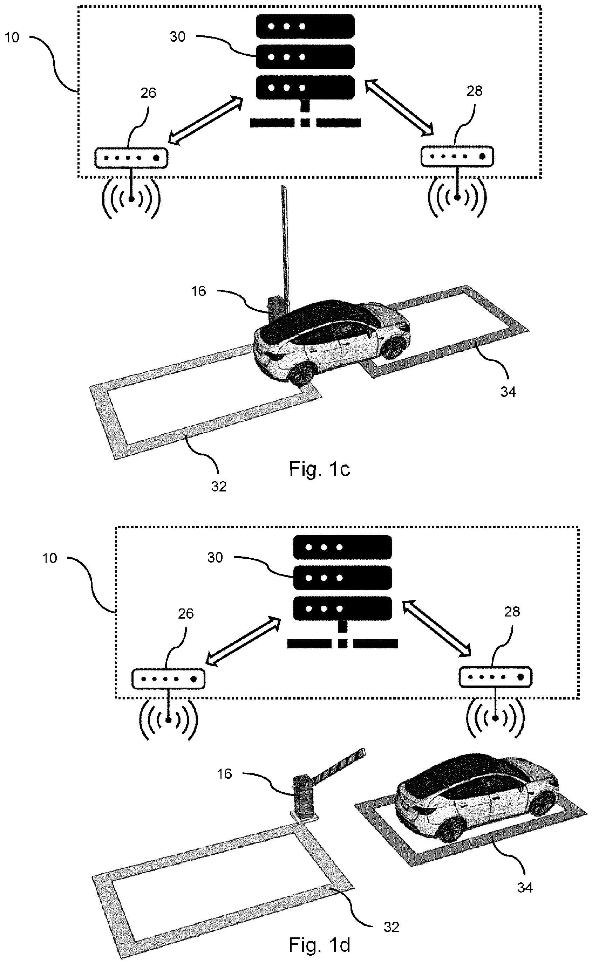

Figs. 1a to 1d show a system 10 and a mobile device 12 which can be used for validating an access of a vehicle 14 to a parking space (not shown in Figs. 1a to 1d). Access to the parking space may be controlled by a barrier 16 (or blocking device) which is in data communication with the system 10. The barrier 16 can be moved between a closed position as shown in Figs. 1a, 1b, and 1d and an open position as shown in Fig. 1c. The system 10 controls the opening and closing of the barrier 16.

The vehicle 14 may be a car, motorcycle, or any other type of vehicle that is usually parked in a parking space. The barrier 14 may be provided for controlling the access to the parking space. Several barriers 16 may be used for controlling the access to the parking space.

The mobile device 12 may be a commonly used mobile device such as a cell phone. A person driving the vehicle 14 may carry the mobile device 12 so that the mobile device 12 is within the vehicle 14. Alternatively, the mobile device 12 may be integral part of the vehicle 14. For example the mobile device 12 is a part of a board computer of the vehicle 14.

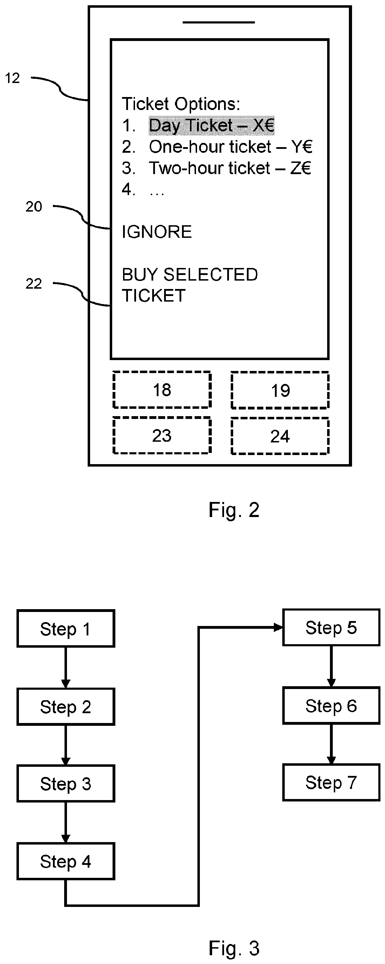

As shown in Fig. 2, the mobile device 12 includes - amongst other things usually present with a mobile device 12 - a device short-range antenna 18, a device long-range antenna 19, a display device 20, an input device 22, a location device 23, and a device controller 24. The device short-range antenna 18 provides short-range radio communication with another short-range antenna. The short-range radio communication may include Ultra-wideband (UWB). The term "short-range" refers to the possibility of data exchange in the order of metres, for example up to 1 m, up to 2 m, or up 5 m. The device short-range antenna 18 may be provided within the housing of the mobile device 12.

The device long-range antenna 19 (an example of the device antenna configured for radio communication) is configured to provide radio communication so that the mobile device 12 can communicate with the system 10 via the mobile (phone) network, mobile radio network, and/or other wireless means of data communication. The location device 23 is configured to determine the location of the mobile device 12 using a global navigation satellite system, e.g. GPS.

The display device 20 may be any device for visually displaying information to a user. The input device 22 may be any device with which the user can input information into the mobile device 12. In the embodiment shown in Fig. 2, a touchscreen provides the display device 20 and the input device 22. The device controller 24 may include a memory and a processor. The memory of the device controller 24 may be configured to store programs, algorithms or applications which can be executed by the processor. Any memory or processor commonly used with mobile devices can be used for the device controller 24. The device controller 24 is in data communication with the device short-range antenna 18, the location device 23, the display device 20, the input device 22, and/or the device long-range antenna 19. The device controller 24 is configured to control the device short-range antenna 18, the location device 23, the display device 20, the input device 22, and/or the device long-range antenna 19 and/or receive data from these components. For example, the device controller 24 is configured to control device short-range antenna 18 for sending and/or receiving data using the short-range radio communication. Further, the device controller 24 can be configured to control the display device 20 to display certain types of information, such as an option for a ticket. Further, the device controller 24 may be configured to receive data indicating a selection or input provided by the user of the mobile device 12.

The system 10 includes a system short-range antenna 26, a second short-range antenna 28, and/or a system controller 30 which is in data communication with the short-range antenna 26 and the second short-range antenna 28 as indicated by the double arrows in Figs. 1a to 1d. The system short-range antenna 26 is positioned to provide short-range radio communication in a virtual zone 32 in front of the barrier 16. The virtual zone 32 may be visually marked so that a person driving the vehicle 14 can see where short-range radio communication with the system 10 is possible. However, the visual marking of the virtual zone 32 is optional. The virtual zone 32 may have a maximal diameter in the order of metres, e.g. up to 2m, 5m, or 10m.

The second short-range antenna 28 is positioned to provide short-range radio communication in a virtual entry-check zone 34 behind the barrier 16 (when the vehicle 14 has passed the barrier 16). The virtual entry-check zone 34 may be visually marked so that a person driving the vehicle 14 can see where short-range radio communication with the system 10 is possible. However, the visual marking of the virtual entry-check zone 34 is optional.

The system short-range antenna 26 and second short-range antenna 28 provide short-range radio communication with another short-range antenna, e.g. with the mobile device 12. The short-range radio communication may include Ultra-wideband (UWB). The term "short-range" refers to the possibility of data exchange in the order of metres, for example up to 1 m, up to 2 m, or up 5 m. The virtual zone 32 and/or the virtual entry-check zone 34 may have a maximal diameter in the order of metres, e.g. up to 2m, 5m, or 10m. The dimension of the virtual zone 32 and/or the virtual entry-check zone 34 may be similar to the vehicle 14. The system short-range antenna 26 and/or second short-range antenna 28 may include one or more antennas for providing the short-range radio communication in the virtual zone 32 and/or the virtual entry-check zone 34, respectively.

The system controller 30 may be not positioned close to the system short-range antenna 26 and/or the second short-range antenna 28. For example, the system controller 30 is a server remote to the short-range antenna 26, the second short-range antenna 28, and/or the barrier 16. For example, a single system controller 30 can control a plurality of system short-range antennas 26, second short-range antennas 28, and/or barriers 16.

A method for validating an access of the vehicle 14 to the parking space using the system 10 and the mobile device 12 using the block diagram of Fig. 3 in connection with Figs. 1a to 1d.

In step 1, the vehicle 14 approaches the barrier 16 and the virtual zone 32 (see Fig. 1a).

In step 2, the vehicle 14 reaches the virtual zone 32 (see Fig. 1b). The system short-range antenna 26 detects the mobile device 12. This is possible since short-range radio communication between the system short-range antenna 26 and the device short-range antenna 18 is possible in the virtual zone 32 due to the small distance between the respective antennas 18 and 26. The system 10 and the mobile device 12 establish a communication channel for exchanging data. Commonly known protocols used with short-range radio communication can be employed for setting up a (secure) communication channel.

In step 3, the system controller 30 recognises the presence of the mobile device 12 and generates a push message including one or more ticket options for parking in the parking space. As shown in Fig. 2, the one or more ticket options may relate to the duration of parking associated with the respective ticket. Further, a ticket option respectively include a price for the respective ticket option. The system controller 30 sends this push message to the mobile device 12 via the system short-range antenna 26. The mobile device 12 receives the push message via the device short-range antenna 18. Since the system 10 sends a push message, the one or more ticket options are displayed by the mobile device 12 on the display device 20 without user interaction. For example, the push message including the one or more ticket options are processed and displayed by an application (app) stored on the mobile device 12.

In step 4, the user either selects the highlighted ticket option (as shown in Fig. 2) by pressing "buy selected ticket" or selects a different to ticket option by selecting one of the non-highlighted ticket options. If the desired ticket option is selected, the user can buy the selected ticket by pressing "buy selected ticket". Optionally, when selecting the ticket, the user can pay the ticket. The payment process can be executed between the system 10 and the mobile device 12 using the short-range radio communication. Alternatively, the payment can be made to a third party, for example a payment service provider. The third party then sends a confirmation of the payment to the system 10. The payment with the system 10 or the third party can be made via long-range radio communication, such as a broadband cellular network. The advance payment of the ticket may allow to freely exit the parking space, e.g. without passing an exit barrier.

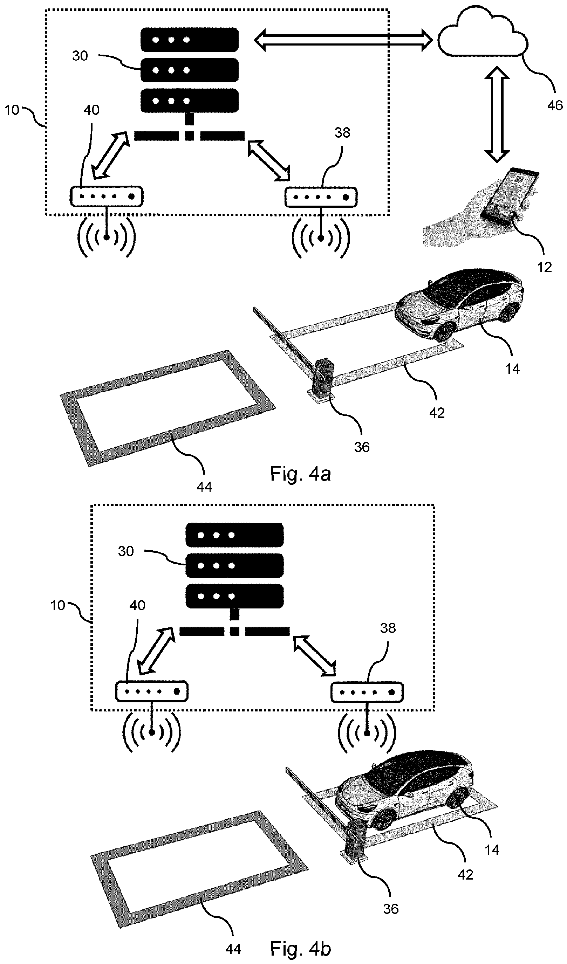

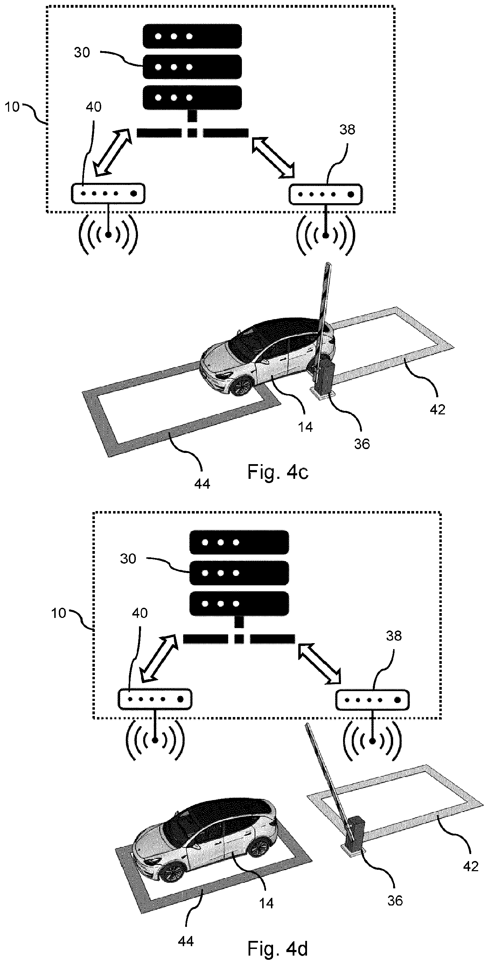

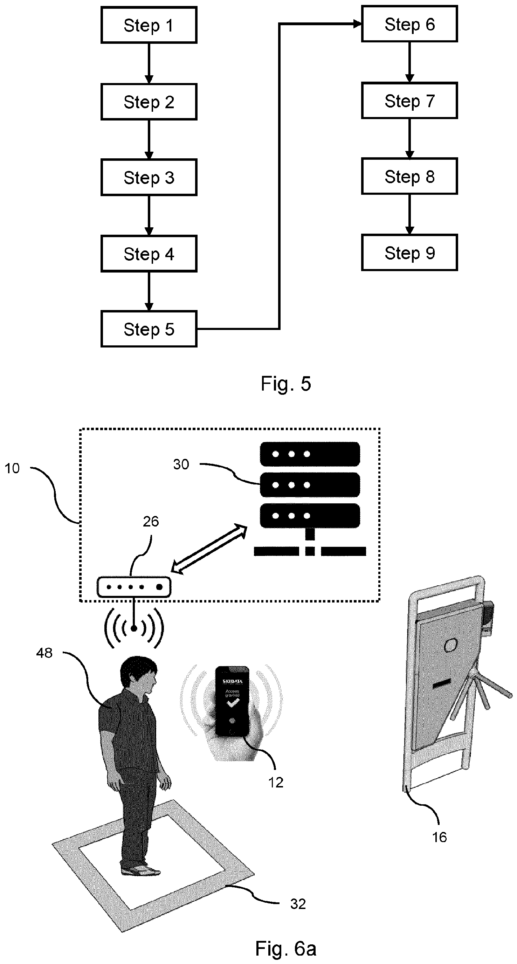

In another embodiment, the ticket can be regarded as a receipt of entering the parking space. In this case, the parking fee may be paid upon leaving the parking space and the amount of the parking fee may depend on the parking duration (an optional payment process and the exit of parking space is described in connection with Figs. 4 and 5). In this case, the user confirms by accepting the ticket that they want to park the vehicle 14 in the parking space.

The user can reject any of the ticket options by pressing "ignore" (see Fig. 3). In this case, the methods ends and no valid access to parking space is provided.

In case the user selects a ticket (and optionally after payment thereof), the method proceeds with step 5. Upon the confirmation of the ticket, the confirmation of the chosen ticket option is sent from the mobile device 12 to the system 10 by using a short-range radio communication between the device short-range antenna 18 and the system short-range antenna 26. After receiving the confirmation of the ticket from the mobile device 12, the system 10, e.g. the system controller 30, generates a ticket which is sent to the mobile device 12. The mobile device 12 may forward the ticket to an electronic wallet on the mobile device 12.

In step 6, upon a generation of the ticket by the system 10, the system 10 sends an opening signal to the barrier 16 so that the barrier 16 opens (see Fig. 1c).

In step 7, the vehicle 14 can now drive through the open barrier 16 (see also Fig. 1c).

After passing the open barrier 16 in step 7, the method proceeds to step 8 which includes detecting whether the vehicle 14 has entered the virtual entry check zone 34. This determination is done using short-range radio communication by the second short-range antenna 28. In other words, the system 10 checks whether it can establish a short-range radio communication with the mobile device 12 via the second short-range antenna 28. If so, the system 10 determines that the vehicle 14 is in the virtual entry check zone 34. In this case, the system 10 sends a closing signal to the barrier 16 for closing the barrier 16 (see Fig. 1d) and records that the vehicle 14 has entered the parking space. As the virtual entry check zone 34 is behind the barrier 16, a detection of the presence of the vehicle 14 in the virtual entry check zone 34 is an indication that the vehicle 14 has left the operating range of the barrier 16 so that the barrier 16 can be safely closed.

The barrier 16 may be optional in which case steps 6 and 7 as well as closing the barrier 16 in step 8 are omitted. The barrier 16 may be omitted in open parking space. In this case, there may be various virtual zones 32, for example at all possible entry points to the parking space.

Figs. 4a to 4d show additional aspects of the system 10 which - in connection with the mobile device 12 - can be used for validating an exit of the vehicle 14 from the parking space. Exit from the parking space may be controlled by an exit barrier 36 which is in data communication with the system 10. The exit barrier 36 can be moved between a closed position as shown in Figs. 4a, 4b, and 4d and an open position as shown in Fig. 4c. The system 10 controls the opening and closing of the exit barrier 36.

The exit barrier 36 may be provided for controlling the exit from the parking space. Several exit barriers 36 may be used for controlling the exit from the parking space which may be all controlled by the system controller 30.

The system 10 can further includes a third short-range antenna 38 and/or a fourth short-range antenna 40 which are in data communication with the system controller 30 as indicated by the double arrows in Figs. 4a to 4d. The first short-range antenna 38 is positioned to provide short-range radio communication in a virtual exit zone 42 in front of the exit barrier 36. The virtual exit zone 42 may be visually marked so that a person driving the vehicle 14 can see where short-range radio communication with the system 10 is possible. However, the visual marking of the virtual exit zone 42 is optional. The virtual exit zone 42 may have a maximal diameter in the order of metres, e.g. up to 2m, 5m, or 10m. The dimensions of the virtual exit zone 42 may correspond to the dimensions of the vehicle 14.

The fourth short-range antenna 40 is positioned to provide short-range radio communication in a virtual exit-check zone 44 behind of the exit barrier 36 (when the vehicle 14 has passed the exit barrier 36). The virtual exit-check zone 44 may be visually marked so that a person driving the vehicle 14 can see where short-range radio communication with the system 10 is possible. However, the visual marking of the virtual exit-check zone 44 is optional.

The third short-range antenna 38 and fourth short-range antenna 40 provide short-range radio communication with another short-range antenna, e.g. with the mobile device 12. The short-range radio communication may include Ultra-wideband (UWB). The term "short-range" refers to the possibility of data exchange in the order of metres, for example up to 1 m, up to 2 m, or up 5 m. The virtual exit zone 42 and/or the virtual exit-check zone 44 may have a maximal diameter in the order of metres, e.g. up to 2m, 5m, or 10m. The dimensions of the virtual exit zone 42 and/or the virtual exit-check zone 44 may be similar to the vehicle 14. The first short-range antenna 38 and/or fourth short-range antenna 40 may include one or more antennas for providing the short-range radio communication in the virtual exit zone 42 and/or the virtual exit-check zone 44, respectively.

The system controller 30 may be not positioned close to the third short-range antenna 38 and/or the fourth short-range antenna 40. For example, the system controller 30 is a server remote to the third short-range antenna 38, the fourth short-range antenna 40, and/or the exit barrier 36. For example, a single system controller 30 can control a plurality of third short-range antennas 38, fourth short-range antennas 40, and/or exit barriers 36.

A method for validating an exit of the vehicle 14 from the parking space using the system 10 and the mobile device 12 using the block diagram of Fig. 5 in connection with Figs. 4a to 4d.

Step 1 is optional and is optionally executed if the ticket is not pre-paid but is paid prior to leaving the parking space. For example, as shown in Fig. 4a, the ticket stored on the mobile device 12 may be paid via a third party 46, for example a payment service provider. The third party 46 then sends a confirmation to the system 10 that the ticket has been paid. The payment with the system 10 or the third party 46 can be made via long-range radio communication, such as a broadband cellular network. This is indicated by the double-arrow between the mobile device 12 and the third party 46 in Fig. 4a. The third party 46 may be in data communication with the system 10, e.g. via the internet.

The ticket or the application executed on the mobile device 12 may include a link for paying the ticket. The parking fee may depend on the time that has passed since the vehicle 14 has entered the parking space, e.g. after the detection of the vehicle 14 in the virtual zone 32 and/or the virtual entry-check zone 34.

Alternatively, the ticket can be paid at an automated ticket station or a ticket machine. For example, the ticket includes a bar code, QR code, a near-field communication (NFC) ticket, or a wallet ticket that can be read by the automated ticket station or a ticket machine. After the payment of the ticket, the automated ticket station or a ticket machine sends a confirmation to the system 10 that the ticket has been paid. The ticket can be paid using short range radio communication payment like NFC/Wallet.

In step 2, the vehicle 14 approaches the exit barrier 36 and the virtual exit zone 42 (see Fig. 4a).

In step 3, the vehicle 14 reaches the virtual exit zone 42 (see Fig. 4b). The third short-range antenna 38 detects the mobile device 12. This is possible since short-range radio communication between the third range antenna 38 and the device short-range antenna 18 is possible in the virtual exit zone 42 due to the small distance between the respective antennas 18 and 42. The system 10 and the mobile device 12 establish a communication channel for exchanging data. Commonly known protocols used with short-range radio communication can be employed for setting up a (secure) communication channel.

In step 4, the system controller 30 recognises the presence of the mobile device 12 and accesses the ticket stored on the mobile device 12, e.g. in the electronic wallet or the application. The system controller 30 gathers information on the ticket, such as the ticket identification number, etc. The system 10 accesses the mobile device 12 via the third short-range antenna 38. This process can be executed without user interaction.

In step 5, the system 10 identifies whether the ticket has been paid. For example, the system checks whether it has received a confirmation that the ticket has been paid in step 1. Alternatively, the payment of the ticket is done now as described in step 1, e.g. via the third party 46.

In case that the ticket has been paid, the method proceeds with step 6 in which the ticket is forwarded to the electronic wallet on the mobile device 12.

In step 7, upon the determination that the ticket has been paid, the system 10 sends an opening signal to the exit barrier 36 so that the exit barrier 36 opens (see Fig. 4c). Alternatively, the exit barrier 36 will be opened if the ticket stored in the wallet is presented to a reading device of the exit barrier 36. For example, the paid ticket includes a bar code or QR code that can be detected by the reading device, such as scanner. Further, if the electronic ticket includes a near-field communication (NFC) ticket or a wallet ticket, the ticket can be paid using short range radio communication payment like NFC/Wallet.

In step 8, the vehicle 14 can now drive the open barrier 16 (see Fig. 4c).

After passing the open barrier 16 in step 8, the method proceeds to step 9 which includes detecting whether the vehicle 14 has entered the virtual exit check zone 44. This determination is done using short-range radio communication by the fourth short-range antenna 40. In other words, the system 10 checks whether it can establish a short-range radio communication with the mobile device 12 via the fourth short-range antenna 40. If so, the system 10 determines that the vehicle 14 is in the virtual exit check zone 44. In this case, the system 10 sends a closing signal to the exit barrier 36 for closing the exit barrier 36 (see Fig. 4d) and records that the vehicle 14 has left the parking space. As the virtual exit check zone 44 is behind the exit barrier 36, a detection of the presence of the vehicle 14 in the virtual exit check zone 44 is an indication that the vehicle 14 has left the operating range of the exit barrier 36 so that the exit barrier 36 can be safely closed.

The exit barrier 36 may be optional in which case steps 7 to 9 are omitted. The exit barrier 36 may be omitted in open parking space in which, for example, pre-paid tickets are used (see Fig. 3).

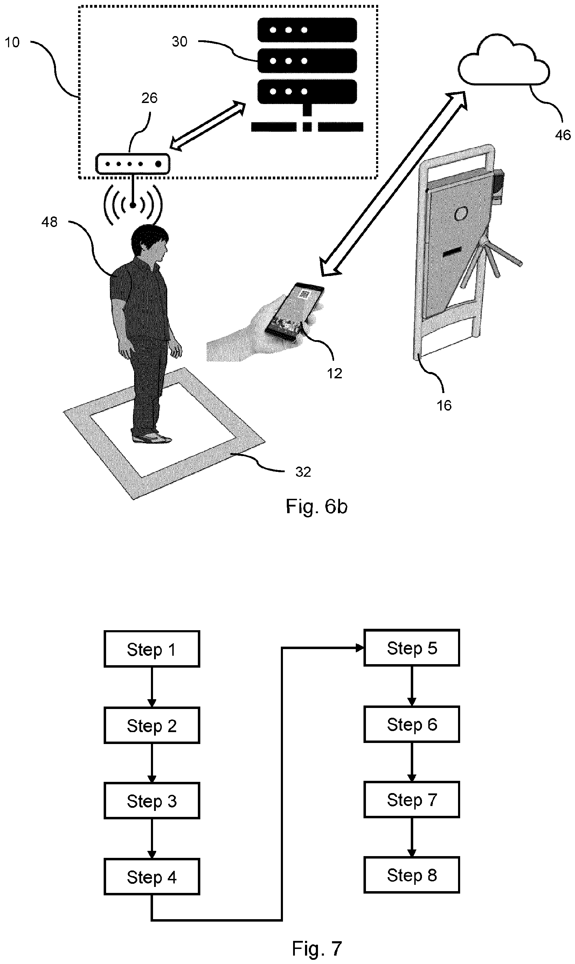

Figs. 6 and 7 refer to an embodiment of the system 10 and the mobile device 12 which can be used for validating an access of a person 48 to a concert venue. The system 10 and the mobile device 12 include the same features, optional embodiments, and/or characteristics as discussed in connection with Figs. 1 to 3 except for the following differences.

The concert venue is an example for any venue, show, or the like for which a ticket needs to be purchased. The concert venue is an example for a restricted zone. The concert venue may be accessed at one or more checkpoints. The access may be controlled by security staff who check the validity of ticket at the checkpoint. In the embodiment of Figs. 6a and 6b, the checkpoint includes the barrier 16 which comprises a turnstile. The turnstile may be in an open state in which the turnstile can be manually rotated if a valid ticket is presented. The turnstile may be in a locked state in which the turnstile cannot be rotated. The turnstile can be in the locked state if no ticket is presented or if an invalid ticket is presented.

The barrier 16 may include a ticket reader such as a scanner. The ticket may be an electronic ticket which can be stored on the mobile device 12. The ticket may be displayed by the display device 20 so that the barrier 16 can read the ticket (e.g. a bar code, a QR code, a near-field communication (NFC) ticket, or a wallet ticket).

The system 10 includes the system short-range antenna 26 and/or the system controller 30 which is in data communication with the short-range antenna 26 as indicated by the double arrow in Figs. 6a and 6b. The system short-range antenna 26 is positioned to provide short-range radio communication in the virtual zone 32 which can be remote to barrier 16. For example, the virtual zone 32 may be in an entrance hall of the concert venue or outside the premises of the concert venue. The virtual zone 32 may be close to commonly known ticket shops of the concert venue and/or vending machines where physical tickets can be purchased. The purchase of a ticket can be spatially separated from the checkpoints which may provide a greater throughput of people to the concert venue. There may be a plurality of virtual zones 32.

The virtual zone 32 may be visually marked so that the person 48 can see where short-range radio communication with the system 10 is possible (i.e. where the person 48 can get an electronic ticket to the concert venue). However, the visual marking of the virtual zone 32 is optional. The virtual zone 32 may have a maximal diameter in the order of metres, e.g. up to 1m, 2m, 5m, or 10m. As explained above, the system short-range antenna 26 may include a plurality of antennas for providing the short-range radio communication in the virtual zone 32. The virtual zone 32 may be marked as a ticket fast lane.

The second short-range antenna 28 may not be present with the embodiment of Figs. 6 to 7.

A method for validating an access of the person 48 to the concert venue using the system 10 and the mobile device 12 using the block diagram of Fig. 7 in connection with Figs. 6a and 6b.

In step 1, the person 48 enters the virtual zone 32 (see Fig. 6a). The application on the mobile device 12 for receiving and processing push messages from the system 10 may run in the background.

In step 2, the system short-range antenna 26 detects the mobile device 12. This is possible since short-range radio communication between the system short-range antenna 26 and the device short-range antenna 18 is possible in the virtual zone 32 due to the small distance between the respective antennas 18 and 26. The system 10 and the mobile device 12 establish a communication channel for exchanging data. Commonly known protocols used with short-range radio communication can be employed for setting up a (secure) communication channel.

In step 3, the system controller 30 recognises the presence of the mobile device 12 and generates a push message including one or more ticket options for the concert venue. The one or more ticket options may include a price for the respective ticket option. The one or more ticket options may include the time and date of the concert, the number of tickets that are still available, the exact location (e.g. the hall or auditorium), etc.

The system controller 30 sends the push message to the mobile device 12 via the system short-range antenna 26. The mobile device 12 receives the push message via the device short-range antenna 18. Since the system 10 sends a push message, the one or more ticket options are displayed by the mobile device 12 on the display device 20 without user interaction. As previously described, the push message including the one or more ticket options are processed and displayed by an application (app) stored on the mobile device 12. The push message may be pushed to the lock screen of the mobile device 12.

In step 4, the person 48 either purchases the ticket option (for example by pressing "buy selected ticket") or ignores the ticket offer (e.g. if the person 48 passes by the virtual zone 32 without wanting to enter the concert venue). The purchase of the ticket can be associated with the payment of the ticket. The payment process can be executed between the system 10 and the mobile device 12 using the short-range radio communication. Alternatively, the payment can be made to a third party, for example a payment service provider. The third party then sends a confirmation of the payment to the system 10. The payment with the system 10 or the third party can be made via long-range radio communication, such as a broadband cellular network which is indicated by the double-arrow in Fig. 6b.

In case the person 48 successfully purchased a ticket, the method proceeds with step 5. Upon the confirmation of the ticket, the confirmation of the ticket is sent from the mobile device 12 to the system 10 by using a short-range radio communication between the device short-range antenna 18 and the system short-range antenna 26. After receiving the confirmation of the ticket from the mobile device 12, the system 10, e.g. the system controller 30, generates a ticket which is sent to the mobile device 12. The mobile device 12 may forward the ticket to an electronic wallet on the mobile device 12.

In step 6, the person 48 approaches the barrier 16 and presents the ticket to a scanner of the barrier 16. The ticket may include a bar code or QR code that can be read by the scanner of the barrier 16. Further, if the electronic ticket includes a near-field communication (NFC) ticket or a wallet ticket, the ticket can be paid using a NFC transmitter of the barrier 16.

In step 7, the barrier 16 checks whether the presented ticket is recognized by a ticket management system as valid ticket (e.g. has not been used with another person 48, has been correctly purposed, is valid for the respective concert venue, etc). To this end, the barrier 16 may be in data communication with the system controller 30 which can also execute the ticket management system.

In step 8, after conformation of the ticket management system that the ticket is valid, the barrier 16 is put in the open state so that the person 48 can pass the barrier 16 so that the person 48 can enter the concert venue.

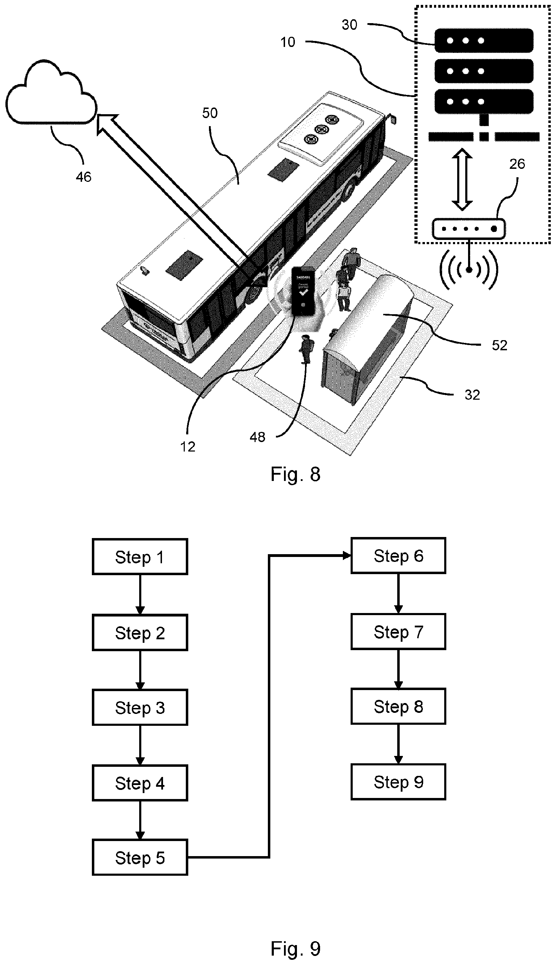

Figs. 8 and 9 refer to an embodiment of the system 10 and the mobile device 12 which can be used for validating access of the person 48 to a public transport system. The system 10 and the mobile device 12 include the same features, optional embodiments, and/or characteristics as discussed in connection with Figs. 6 and 7 except for the following differences.

Fig. 8 shows a bus 50 as an exemplary vehicle of a public transport system. However, the invention is not limited to a bus, but other means of transports are possible, such as trains, airplanes, underground trains, trams, etc. In general, the public transport system is an example for a restricted zone.

The interior of the vehicle of a public transport system (e.g. the interior of the bus 50) may correspond to the restricted area. In the embodiment of Fig. 8, the restricted area is not limited by the barrier 16. However, as commonly used, the access to an underground system may be limited by one or more barriers 16. In this case, the restricted area may relate to the area whose access is controlled by the barriers 16.

The virtual zone 32 may be an area around a bus stop 52. However, the virtual zone 32 may additionally or alternatively include parts of the interior of the bus 50. For example, certain doors of the bus 50 may be accessed without a ticket in that the ticket can be purchased after accessing the bus 50.

As described above, the system 10 includes the system short-range antenna 26 and/or the system controller 30 which is in data communication with the system short-range antenna 26 as indicated by the double arrow in Fig. 8. The system short-range antenna 26 is positioned to provide short-range radio communication in the virtual zone 32. For example, the system short-range antenna 26 may be attached to the bus stop 52 or is attached to a pole close to the bus stop 52. For example, each or selected bus stops 52 of the public transport system are provided with the system short-range antenna 26.

The virtual zone 32 may be visually marked so that the person 48 can see where short-range radio communication with the system 10 is possible. However, the visual marking of the virtual zone 32 is optional because virtual zone 32 is apparent to the person 48 by the bus stop 52. The virtual zone 32 may have a maximal diameter in the order of metres, e.g. up to 1m, 2m, 5m, or 10m. As explained above, the system short-range antenna 26 may include a plurality of antennas for providing the short-range radio communication in the virtual zone 32.

A method for validating an access of the person 48 to the bus 50 of the public transport system using the system 10 and the mobile device 12 using the block diagram of Fig. 9 in connection with Fig. 8.

In step 1, the person 48 enters the virtual zone 32 (see Fig. 8). For example, the person 48 stands close to or at the bus stop 52.

In step 2, the system short-range antenna 26 detects the mobile device 12. This is possible since short-range radio communication between the system short-range antenna 26 and the device short-range antenna 18 is possible in the virtual zone 32 due to the small distance between the respective antennas 18 and 26. The system 10 and the mobile device 12 establish a communication channel for exchanging data. Commonly known protocols used with short-range radio communication can be employed for setting up a (secure) communication channel.

In step 3, the system controller 30 recognises the presence of the mobile device 12 and generates a push message including one or more ticket options for travelling with the bus 50 or, more generally, using the public transport system. The one or more ticket options may include a price for the respective ticket option.

The system controller 30 sends this push message to the mobile device 12 via the system short-range antenna 26. The mobile device 12 receives the push message via the device short-range antenna 18. Since the system 10 sends a push message, the one or more ticket options are displayed by the mobile device 12 on the display device 20 without user interaction. As previously described, the push message including the one or more ticket options are processed and displayed by an application (app) stored on the mobile device 12. The push message may be pushed to the lock screen of the mobile device 12.

In step 4, the user either selects the highlighted ticket option (similar to the process shown in Fig. 3) by pressing "select ticket" (which is similar to the option "buy selected ticket in Fig. 3) or selects a different to ticket option by selecting one of the non-highlighted ticket options. If the desired ticket option is selected, the user can buy the selected ticket by pressing "buy selected ticket". The ticket can be regarded as a receipt of validly using the bus 50 or, more generally, the public transport system. In this case, the price of the ticket depends on the distance and/or duration travelled by the person 48. The price is calculated when exiting the bus 50 or the public transport system (as explained further below).

In another embodiment, the ticket may be paid upon buying the ticket. In this case, the ticket may travel with the bus 50 for a predetermined number of stops, within a predetermined zone of the public transport system, or for a predetermined period of time (e.g. a day ticket). The one or more ticket options may relate to the number of stops, the one or more zones, or the duration of validity of the ticket.

The payment process can be executed between the system 10 and the mobile device 12 using the short-range radio communication. Alternatively, the payment can be made to the third party 46, for example a payment service provider. The third party 46 then sends a confirmation of the payment to the system 10. The payment with the system 10 or the third party 46 can be made via long-range radio communication, such as a broadband cellular network which is indicated by the double-arrow in Fig. 8.

In case the person 48 successfully purchased a ticket, the method proceeds with step 5. Upon the confirmation of the ticket, the confirmation of the ticket is sent from the mobile device 12 to the system 10 by using a short-range radio communication between the device short-range antenna 18 and the system short-range antenna 26. After receiving the confirmation to the ticket from the mobile device 12, the system 10, e.g. the system controller 30, generates a ticket which is sent to the mobile device 12. The mobile device 12 may forward the ticket to an electronic wallet on the mobile device 12.

In step 5, the ticket may optionally be registered when entering the bus 50 or entering the public transport system. This may be done by detecting the presence of the mobile device 12 of the person 48 in the bus 50. To this end, the bus 50 may include one or more short-range antennas similar to the system short-range antenna 26. The process for detecting the mobile device 12 in the bus 50 may be similar to the detection of the mobile device 12 in the virtual zone 32. Alternatively, the person 48 registers themselves in the bus 50 by presenting the ticket to a scanner in data communication with the system controller 30. The registration may be used for determining the start point and/or start time of the journey of the person 48 on the public transport system. In a further embodiment, an entrance barrier is provided which the person 48 needs to pass for accessing the public transport system. The entrance barrier may for example be provided at entrances to an underground system

In step 6, the person 48 travels on the bus 50 to their destination. The journey may include changing the bus 50 or change to different vehicles of the public transport system.

In step 7, the person 48 leaves the bus 50 (more generally, the public transport system) or the virtual zone 32 at the bus stop 52 where the person 48 has left the bus 50. The person 48 may register that he has left the bus 50 in a similar way as it was recognized that the person 48 has entered the bus 50 (e.g. by detecting the absence of the mobile device 12 or the person 48 registers that they exit the bus 50). In this case, it is determined that the journey of the person 48 has ended. This may also be determined if the person 48 passes an exit barrier of the public transport system. The exit barrier may for example be provided at exits from the underground system

Alternatively, the system 10 detects that the mobile device 12 enters the virtual zone 32 of the exit bus stop 52 and recognizes a valid ticket. In this case, no push message is sent to the mobile device 12 including the one or more ticket options. Rather, it is checked whether the person 48 leaves the virtual zone 32 of the exit bus stop 52. In this case, it is determined that the journey of the person 48 has ended.

In step 8, after end of the journey of the person 48 has been determined, the system 10 calculates the distance between the bus stop 52 where the person 48 entered the bus 50 and the bus stop 52 where the person 48 left the bus 50. The distance between the two bus stops 52 (e.g. the number of bus stops in between) may determine fee for using the public transport system. Alternatively or additionally, the fee depends on the time between boarding and leaving the bus 50.

In step 9, the fee calculated in step 8 is invoiced to the person 48. For example, a link for paying the fee (e.g. using the third party 46) is sent to the mobile device 12 of the person 48. Alternatively, the invoices are accumulated over a certain period of time (e.g. a day, week, month) and need to be paid in bulk by the person 48, e.g. using a direct debiting.

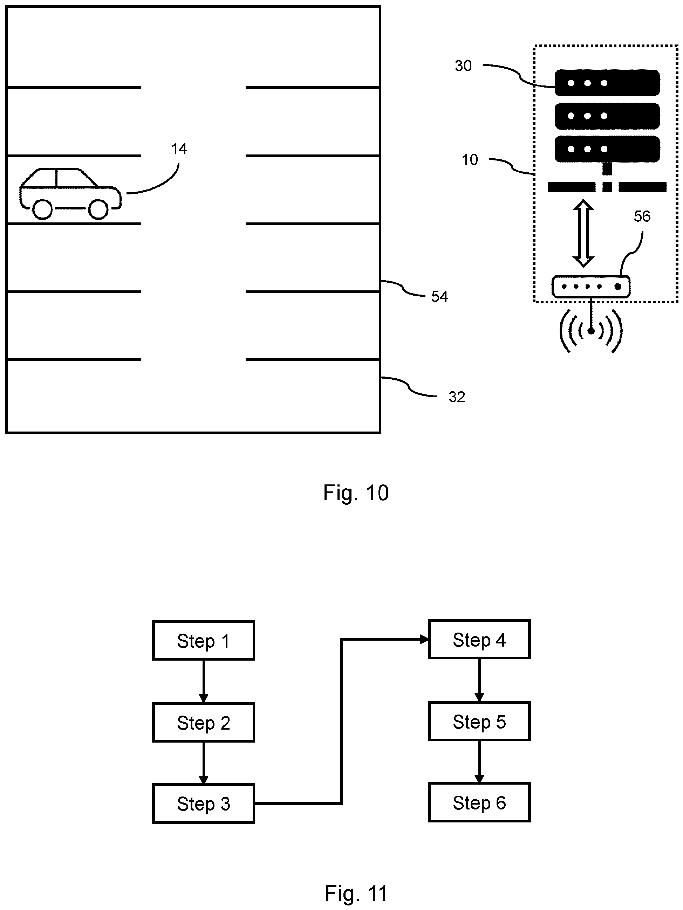

Figs. 10 and 11 refer to an embodiment of the system 10 and the mobile device 12 which can be used for validating access of the vehicle 14 to a parking space 54. The system 10 and the mobile device 12 include the same features, optional embodiments, and/or characteristics as discussed in connection with Figs. 1 and 2 except for the following differences.

The system 10 includes a system long-range antenna 56 instead of or in addition to the system short-range antenna 26. The system long-range antenna 56 (an example of the system antenna configured for radio communication) is configured for long-range radio communication with a mobile (phone) network, mobile radio network, and/or other wireless means of data communication. The system long-range antenna 56 may not be part of the system 10 but can be replaced by connecting the system 10 system controller 30 to a mobile (phone) network or mobile radio network.

The virtual zone 32 is identical with the parking space 54 in the embodiment shown in Fig. 4. Unlike the embodiment shown in Figs. 1 and 2, the virtual zone 32 is not offset from the parking space 54 but overlaps with the parking space 54. A barrier 16 may not be provided. The ticket may need to be paid in advance, for example upon entering the parking space 54.

A method for validating an access of the vehicle 14 to the parking space 54 using the system 10 and the mobile device 12 using the block diagram of Fig. 11 in connection with Fig. 10. In this embodiment, the validation of access to the parking space 54 may correspond with the purchase of a valid ticket.

In step 1, the virtual zone 32 is defined with regard to its position and size. For example the virtual zone 32 is defined using global coordinates that can be compared with the position as determined by the location device 23. The definition of the virtual zone 32 may be made once for example when setting up the system 10 for validating access to the parking space 54.

In step 2, the size and position of the virtual zone 32 is sent to the mobile device 12 and stored in the memory of the device controller 24. This may also be done once.

In step 3, the mobile device 12 (in particular the device controller 24) continuously or periodically uses to location device 23 for determining the current position of the mobile device 12 and/or the vehicle 14. After the current position of the mobile device 12 and/or the vehicle 14 is determined, the mobile device 12 (in particular the device controller 24) checks whether the mobile device 12 and/or the vehicle 14 is within the virtual zone 32. If so, the method proceeds with step 4. If not, step 3 is repeated.

In step 4, the mobile device 12 sends a notification to the system 10 via the device long-range antenna 19 that the vehicle 14 is within the virtual zone 32. The system controller 30 receives the notification from the mobile device 12 via the system long-range antenna 56. If a plurality of virtual zones 32 are stored with the system 10, the mobile device 12 may be configured to indicate the virtual zone 32, for example by sending the coordinates of the virtual zone 32 or by sending a number identifying the virtual zone 32.

In step 5, the system controller 30 recognises the presence of the vehicle 14 in the virtual zone 32 and generates a push message including one or more ticket options for parking in the parking space 54. As shown in Fig. 3, the one or more ticket options may relate to the duration of parking associated with the respective ticket. Further, the one and more ticket options respectively include a price for the respective ticket option. The system controller 30 sends this push message to the mobile device 12 via the system long-range antenna 56. The mobile device 12 receives the push message via the device long-range antenna 19. Since the system 10 sends a push message, the one or more ticket options are displayed by the mobile device 12 on the display device 20 without user interaction. For example, the push message including the one or more ticket options are processed and displayed by an application (app) stored on the mobile device 12.

In step 6, the user either selects the highlighted ticket option (as shown in Fig. 3) by pressing "buy selected ticket" or selects a different to ticket option by selecting one of the non-highlighted ticket options. If the desired ticket option is selected, the user can buy the selected ticket by pressing "buy selected ticket". Optionally, when selecting the ticket, the user can pay the ticket. The payment process can be executed between the system 10 and the mobile device 12 using the long-range radio communication. Alternatively, the payment can be made to a third party, for example a payment service provider. The third party then sends a confirmation of the payment to the system 10. The payment with the system 10 or the third party can be made via long-range radio communication, such as a broadband cellular network. The advance payment of the ticket may allow to park in the parking space 54 for a duration as defined in the ticket.

The user can reject any of the ticket options by pressing "ignore" (see Fig. 3). In this case, the methods ends and no valid access to parking space 54 is provided, i.e. parking in the parking space 54 is not permitted.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A method for validating access of a person (48) and/or a vehicle (14) to a restricted zone, the person (48) and/or vehicle (14) with access to a mobile device (12) configured for radio communication, the method comprising the steps of:
a) detecting the presence of the mobile device (12) in a virtual zone (32);
b) sending one or more options for an electronic ticket to the mobile device (12);
c) confirming one of the options for the electronic ticket using the mobile device (12); and
d) generating the electronic ticket which provides valid access to the restricted zone.

2. The method of claim 1, further comprising providing a system short-range antenna (26) configured to provide short-range radio communication in the virtual zone (32) and the mobile device (12) is configured for short-range radio communication,
wherein step a) includes detecting the presence of the mobile device (12) in the virtual zone (32) using the short-range radio communication, and
wherein optionally step b) includes sending the one or more ticket options using the short-range radio communication.

3. The method of claims 1 or 2, wherein, prior to step a), a location and a size of the virtual zone (32) is defined, and wherein step a) is executed using a global navigation satellite system.

4. The method of any one of the preceding claims, wherein, in step b), the one or more ticket options are pushed to the mobile device (12).

5. The method of any one of the preceding claims, wherein the mobile device (12) is configured to store and execute an application configured to receive the one or more options for the electronic ticket.

6. The method of any one of the preceding claims, wherein step a) includes establishing a communication channel with the mobile device (12).

7. The method of any one of the preceding claims, wherein step c) includes paying the ticket, wherein optionally the ticket is paid using the short-range radio communication or by long-range radio communication.

8. The method of any one of the preceding claims, wherein the restricted zone is a parking space (54) for the vehicle (14),
wherein optionally the confirmation of one of the options for the electronic ticket opens an entrance barrier (16) controlling an entrance to the parking space (54),
wherein further optionally a second short-range antenna (28) is provided for providing short-range radio communication in a virtual entry-check zone (34), the entrance barrier (16) being positioned between the virtual entry-check zone (34) and the virtual zone (32), and the entry of the vehicle (14) in the parking space (54) being confirmed if the mobile device (12) is detected in the virtual entry-check zone (34) using the short-range radio communication.

9. The method of claim 8, further comprising providing an exit barrier (36) for controlling exit from the parking space (54),
wherein optionally the method further comprises
paying the ticket and opening the exit barrier (36) after detecting the paid ticket at the exit barrier (36), or
detecting the presence of the mobile device (12) in a virtual exit zone close to or at the exit barrier (36) using short-range radio communication, and opening the exit barrier (36) if the ticket has been paid.

10. The method of claim 7, wherein the restricted zone is a venue area, wherein the virtual zone (32) is offset to a checkpoint at which a valid access to the venue area is checked, wherein optionally the checkpoint includes a barrier (16).

11. The method of any one of the claims 1 to 7, wherein the restricted zone is part of a public transport system, wherein optionally the virtual zone (32) is at a stop or station of a vehicle of the public transport system.

12. The method of claim 11, further comprising detecting the presence of the mobile device (12) in another virtual zone (32) using short-range radio communication after using the public transport system, wherein a price of the ticket depends on the virtual zones (32) where the mobile device (12) was detected upon accessing and exiting the public transport system.

13. A system for validating access of a person (48) and/or a vehicle (14) to a restricted zone, the person (48) and/or vehicle (14) having access to a mobile device (12) configured for short-range radio communication, the system comprising
a system short-range antenna (26) configured to provide short-range radio communication in a virtual zone (32), and
a system controller (30) in data-communication with the system short-range antenna (26),
wherein the system controller (30) is configured to
control the antenna for detecting a presence of the mobile device (12) in the virtual zone (32),
upon detection of the mobile device (12) in the virtual zone (32), send one or more options for an electronic ticket to the mobile device (12) via the system short-range antenna (26),
receive a confirmation of one of the options for the electronic ticket from the mobile device (12), and
upon receiving the confirmation, generate an electronic ticket.

14. A system for validating access of a person (48) and/or a vehicle (14) to a restricted zone, the person (48) and/or vehicle (14) having access to a mobile device (12) configured to determine the location thereof using a global navigation satellite system and configured for radio communication, the system comprising
a system controller (30) configured to be in data-communication with the mobile device (12),
wherein the system controller (30) is configured to
define a location and size of the virtual zone (32) and send the information on the location and on the size to the mobile device (12),
upon receiving a confirmation that the mobile device (12) is in the virtual zone (32) by the mobile device (12), send one or more options for an electronic ticket to the mobile device (12),
receive a confirmation of one of the options for the electronic ticket from the mobile device (12), and
upon receiving the confirmation, generate an electronic ticket.

15. The system of claims 13 or 14, further comprising a barrier (16) for controlling access to the restricted zone, the barrier (16) configured to be in an open state in which the person (48) and/or the vehicle (14) can pass the barrier (16) and to be in a closed state in which the barrier (16) blocks the person (48) and/or the vehicle (14) from passing the barrier (16),
wherein the system controller (30) is in data-communication with the barrier (16) for controlling the barrier (16) to be in the open state or the closed state, and
wherein the system controller (30) puts the barrier (16) in the open state after generating the ticket.
